(19) Europäisches Patentamt
European Patent Office
Office européen des brevets

(11) **EP 3 676 952 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **17778186.1**

(22) Anmeldetag: **29.08.2017**

(51) Internationale Patentklassifikation (IPC):
**H02P 21/00** (2016.01)   **H02P 21/20** (2016.01)
**H02P 25/03** (2016.01)

(52) Gemeinsame Patentklassifikation (CPC):
**H02P 21/20; H02P 21/0025; H02P 21/0089; H02P 25/03;** Y02T 10/72

(86) Internationale Anmeldenummer:
**PCT/EP2017/071662**

(87) Internationale Veröffentlichungsnummer:
**WO 2019/042533 (07.03.2019 Gazette 2019/10)**

(54) **VERFAHREN ZUR FELDORIENTIERTEN REGELUNG EINER PERMANENTERREGTEN SYNCHRONMASCHINE MIT RELUKTANZMOMENT UND REGLERSTRUKTUR DAMIT**

METHOD FOR FIELD-ORIENTED CONTROL OF A PERMANENTLY EXCITED SYNCHRONOUS RELUCTANCE MACHINE AND CONTROLLER COMPRISING THE SAME

PROCÉDÉ DE RÉGLAGE ORIENTÉ DANS LE CHAMP D'UNE MACHINE SYNCHRONE À EXCITATION PERMANENTE À MOMENT DE RÉLUCTANCE ET RÉGULATEUR COMPRENANT CELUI-CI PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.07.2020 Patentblatt 2020/28**

(73) Patentinhaber: **GKN Automotive Ltd.**
**West Midlands, B37 7YE (GB)**

(72) Erfinder: **GEMASSMER, Tobias**
**53225 Bonn (DE)**

(74) Vertreter: **karo IP**
**karo IP Patentanwälte**
**Kahlhöfer Rößler Kreuels PartG mbB**
**Platz der Ideen 2**
**40476 Düsseldorf (DE)**

(56) Entgegenhaltungen:
**EP-A1- 3 104 520     EP-A2- 2 544 362**
**US-A1- 2013 257 324     US-A1- 2014 306 638**

- **SEPULCHRE LEOPOLD ET AL: "Flux-weakening strategy for high speed PMSM for vehicle application", 2016 INTERNATIONAL CONFERENCE ON ELECTRICAL SYSTEMS FOR AIRCRAFT, RAILWAY, SHIP PROPULSION AND ROAD VEHICLES & INTERNATIONAL TRANSPORTATION ELECTRIFICATION CONFERENCE (ESARS-ITEC), IEEE, 2. November 2016 (2016-11-02), Seiten 1-7, XP033059462, DOI: 10.1109/ESARS-ITEC.2016.7841413 [gefunden am 2017-02-02]**
- **LEMMENS JORIS ET AL: "PMSM Drive Current and Voltage Limiting as a Constraint Optimal Control Problem", IEEE JOURNAL OF EMERGING AND SELECTED TOPICS IN POWER ELECTRONICS, IEEE, PISCATAWAY, NJ, USA, Bd. 3, Nr. 2, 1. Juni 2015 (2015-06-01), Seiten 326-338, XP011579996, ISSN: 2168-6777, DOI: 10.1109/JESTPE.2014.2321111 [gefunden am 2015-04-30]**

**Beschreibung**

Die vorliegende Erfindung betrifft ein Verfahren zur feldorientierten Regelung einer permanenterregten Synchronmaschine mit Reluktanzmoment und eine Reglerstruktur damit, wobei die Synchronmaschine insbesondere zum Antrieb eines Kraftfahrzeugs eingesetzt wird.

Als elektrische Maschinen in Elektrofahrzeugen können permanentmagneterregte Synchronmaschinen (PMSM) eingesetzt werden. Diese weisen gegenüber den Asynchronmaschinen höhere Wirkungsgrade sowie eine bessere Leistungsdichte auf. Als Bauform einer permanentmagneterregten Synchronmaschine sind Varianten mit in den Rotor eingelassenen Magneten (*"Interior Permanent Magnet Synchronous Machines"*, IPMSM) bevorzugt. Diese weisen im Vergleich zur Bauform mit Oberflächenmagneten verschiedene Vorteile hinsichtlich der Anwendung als Traktionsantrieb auf: Aufgrund des höheren magnetischen Leitwerts in der Querachse (q-Achse) im Vergleich zur am Permanentmagneten orientierten Längsachse (d-Achse) lässt sich bei Synchronmaschinen mit eingebetteten Magneten neben dem synchronen Moment ein Reluktanzmoment nutzen, welches insbesondere im Feldschwächebereich zum Tragen kommt. Durch das zusätzliche Reluktanzmoment kann die Maschine mit vergleichsweise weniger Magnetmaterial ausgelegt werden, wodurch sich die Materialkosten reduzieren. Des Weiteren wird der durch die Permanentmagnete verursachte Fluss kleiner, wodurch neben den Schleppverlusten die Leerlaufspannung sowie das Kurzschlussdrehmoment verringert werden, was eine Erhöhung der Eigensicherheit bedeutet. Reluktanzmomente treten auf, wenn sich die Induktivitäten in Feldrichtung und senkrecht dazu unterscheiden. Bei einer Synchronmaschine, bei der die q-Induktivität und d-Induktivität voneinander verschieden sind, ist der Läufer nicht rotationssymmetrisch. Bei einer Synchronmaschine mit innenliegenden Magneten unterscheiden sich die q-Induktivität und d-Induktivität. Außerdem ist der Rotor wegen der innenliegenden Magneten nicht rotationssymmetrisch.

Für permanentmagneterregte Synchronmaschinen mit ausgeprägter Reluktanz soll aus den möglichen Kombinationen von Stromsollwerten $i_d$ und $i_q$ für ein gewünschtes Drehmoment diejenige gewählt werden, die den optimalen Betrieb sicherstellt. Als mögliches Kriterium kann dafür die Minimierung der Summe aller auftretenden Verluste zum Tragen kommen. Eine Vereinfachung stellt das Kriterium der Drehmomenterzeugung mit minimalem Statorstrom dar, bei dem (nur) die Stromwärmeverluste minimiert werden. Dies stellt im Allgemeinen eine gute Näherung dar, weil die Unterschiede im Wirkungsgrad im Vergleich zur Gesamtverlustminimierung gering sein können. Wird bei höheren Drehzahlen ein Drehmoment gefordert, können die Sollwerte für die Stromkomponenten nicht mehr frei nach den genannten Kriterien der Verlustreduktion gewählt werden, weil hier die Betriebsgrenzen bezüglich der Stromrichterausgangsspannung und der Statorstromamplitude beachtet werden müssen.

Als geeignet vordefinierte Stromsollwerte für geforderte Drehmomente können in Kennfeldern hinterlegt werden/sein, die in einer Steuereinrichtung eines Kraftfahrzeugs gespeichert sind. Dabei können mehrdimensionale Kennfelder vorgehalten werden, bei denen die Stromsollwerte z. B. in Abhängigkeit von den geforderten Drehmomenten und in Abhängigkeit von den Verhältnissen von Spannung zu Drehzahl (zwei Dimensionen) hinterlegt sind. Falls auch die sich ändernde Temperatur des Rotors der Synchronmaschine berücksichtigt werden soll, ergibt sich bereits eine weitere, in diesem Fall eine dritte Dimension. Eine Auswertung dieser Kennfelder kann jedoch einerseits eine hohe Rechenleistung und andererseits eine gewisse Dauer erfordern, bis die geforderten Stromsollwerte vorliegen.

Aus dem Artikel "Flux Weakening Strategy for High Speed PMSM for Vehicle Application" sowie der US 2014/0306638 A1, und der US2013/0257324 A1 ist jeweils eine Reglerstruktur zur feldorientierten Regelung einer permanenterregten Synchronmaschine mit Reluktanzmoment bekannt.

Aus der EP 2 544 362 A2 sind eindimensionale Kennfelder bekannt.

Aufgabe der Erfindung ist es daher, die mit Bezug auf den Stand der Technik vorhandenen Probleme zumindest teilweise zu lösen. Insbesondere soll ein Verfahren bereitgestellt werden, so dass das geforderte Drehmoment (sofern erreichbar und/oder unabhängig von der Drehzahl) mit einem möglichst geringen Maschinenstrom erreicht wird. Insbesondere soll zur Ermittlung der Stromsollwerte nicht auf Daten zurückgegriffen werden müssen, die in mehrdimensionalen Kennfeldern hinterlegt sind.

Diese Aufgaben werden gelöst mit einem Verfahren gemäß den Merkmalen des Patentanspruchs 1 und mit einer Reglerstruktur gemäß den Merkmalen des Patentanspruchs 6.

Weitere vorteilhafte Ausgestaltungen des Verfahrens und der Erfindung sind in den weiteren Patentansprüchen angegeben.

Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur feldorientierten Regelung einer permanenterregten Synchronmaschine mit Reluktanzmoment bei. Das Verfahren umfasst zumindest die folgenden Schritte:

a) Ermitteln jeweils einer einzuprägenden flussbildenden Stromkomponente $i_{d,MTPC}$ und einer drehmomentbildenden Stromkomponente $i_{qMTPC}$ in Abhängigkeit eines geforderten Drehmoments $T_{ref}$;
b) Ermittlung jeweils einer Spannungskomponente in Flussrichtung $_{Udref}$ und einer Spannungskomponente senkrecht zur Flussrichtung $u_{qref}$ in Abhängigkeit von den Stromkomponenten $i_{d,MTPC}$ und $i_{q,MTPC}$;

c) Bilden eines Differenzbetrags aus einer vektoriellen Summe $u_s$ aus den Spannungskomponenten $u_{dref}$ und $u_{qref}$ und einer maximalen Spannung $u_{max}$ und Verarbeitung des Differenzbetrags in einem PI-Spannungsregler, wobei als Ausgangsgröße ein erster Differenzwert $\Delta i_d$ erhalten wird;

d) Addieren der flussbildenden Stromkomponente $i_{d,MTPC}$ und des ersten Differenzwerts $\Delta i_d$ und Ermitteln einer Spannungskomponente $u_d$ zur Einprägung auf die Synchronmaschine.

Die Stromkomponenten $i_{d,MTPC}$ und $i_{q,MTPC}$ in Schritt a) können aus jeweils einem ersten Kennfeld ausgelesen werden, wobei das erste Kennfeld eindimensional ist, insbesondere wobei $i = f(T_{ref})$ ist. Das heißt insbesondere, dass die in dem ersten Kennfeld hinterlegten Stromkomponenten $i_{d,MTPC}$ und $i_{q,MTPC}$ ausschließlich in Abhängigkeit von dem geforderten Drehmoment vorliegen. Damit wird hier ein erstes Kennfeld mit einer begrenzten Anzahl von Werten bereitgestellt, das in einer kurzen Zeit und/oder mit einer geringen Rechenleistung ausgelesen werden kann. Das erste Kennfeld kann z. B. auch durch ein Polynom jeweils berechnet werden, wobei auch dabei nur eine begrenzte Anzahl von Werten jeweils bereitgestellt wird.

Die Stromkomponenten $i_{d,MTPC}$ und $i_{q,MTPC}$ werden in Abhängigkeit von dem (z. B. durch einen Fahrer des Kraftfahrzeugs, bzw. durch eine Steuereinrichtung des Kraftfahrzeugs) geforderten Drehmoment ermittelt. Darauf basierend werden die Spannungskomponenten $u_{dref}$ und $u_{qref}$ ermittelt.

In Schritt c) wird die vektorielle Summe $u_s$ (also das Ergebnis einer vektoriellen Addition) der Spannungskomponenten mit einer maximalen Spannung der Synchronmaschine (also einer maximal zulässigen bzw. maximal beaufschlagbaren Spannung) verglichen bzw. ein Differenzbetrag ermittelt. Die vektorielle Summe $u_s$ wird hier als Betrag (also richtungsunabhängig) mit der maximalen Spannung verglichen. Die Ausgangsgröße des PI-Reglers (Proportional-Integral-Regler) ist ein erster Differenzwert $\Delta i_d$ (positiv oder negativ), der in Schritt d) zu der Stromkomponente $i_{d,MTPC}$ hinzuaddiert wird.

Die maximale Spannung $u_{max}$ kann auch bereits eine Regelreserve umfassen, die insbesondere höchstens 10 % des Betrags der hier angesetzten maximalen Spannung $u_{max}$ beträgt.

Der nach Schritt d) erhaltene neue Wert für die Stromkomponente $i_{dref}$ wird nun zur Ermittlung der aufzuprägenden Spannungskomponente $u_d$ herangezogen. Bei der Ermittlung der aufzuprägenden Spannungskomponente $u_d$ kann das Sättigungsverhalten der Synchronmaschine berücksichtigt werden.

Aus der aufzuprägenden Spannungskomponente $u_d$ ergibt sich die aufzuprägende Stromkomponente $i_d$ infolge des Anlegens der Spannungskomponente an der Synchronmaschine.

Insbesondere kann die Spannungskomponente $u_d$ über die Steuerung eines Inverters durch einen Pulse-Width-Modulator (PWM; also einen Pulsweitenmodulator) an der Synchronmaschine angelegt werden. Dadurch werden insbesondere die dreiphasigen Ströme erzeugt, von denen bevorzugt (mindestens) zwei gemessen werden. Die gemessenen Ströme werden unter Verwendung des ebenfalls gemessenen Drehwinkels der Synchronmaschine wieder in die d/q-Komponenten zurückgerechnet.

Die aus der Messung ermittelte Stromkomponente $i_d$ kann durch die Reglerstruktur zurückgeführt und von der Stromkomponente $i_{dref}$ subtrahiert werden. Die so erhaltene Differenz kann durch einen ersten PI-Stromregler verarbeitet werden, wobei als Ausgangsgröße und unter Berücksichtigung einer Kreisfrequenz $\omega$ des Rotors der Synchronmaschine bzw. unter Berücksichtigung einer Flussverkettung $psi_q$ die Spannungskomponente $u_{d,ref}$ bestimmt wird. Unter Berücksichtigung der maximalen Stromrichterausgangsspannung wird aus der Spannungskomponente $u_{d,ref}$ die aufzuprägende Spannungskomponente $u_d$ ermittelt.

Nach Schritt b) wird in einem weiteren Schritt c1) ein anhand der (gemessenen) Stromkomponenten $i_d$ und $i_q$ sowie der zugehörigen Flussverkettungen erreichtes (also in der Synchronmaschine erzeugtes) Drehmoment ermittelt (also geschätzt bzw. berechnet) werden.

In einem weiteren Schritt d1) wird ein Differenzbetrag aus dem erreichten Drehmoment und dem geforderten Drehmoment gebildet und in einem PI-Drehmomentregler verarbeitet werden. Als Ausgangsgröße des PI-Drehmomentreglers wird ein zweiter Differenzwert $\Delta i_q$ erhalten.

In einem Schritt e1) wird die Stromkomponente $i_{q,MTPC}$ und der Differenzwert $\Delta i_q$ addiert und eine Spannungskomponente $u_q$ zur Einprägung auf die Synchronmaschine ermittelt werden.

Der nach Schritt e1) erhaltene neue Wert für die Stromkomponente $i_{qref}$ wird zur Ermittlung der aufzuprägenden Spannungskomponente $u_q$ herangezogen werden. Bevorzugt werden die Schritte c1), d1) und e1) in einem gemeinsamen Prozess ausgeführt.

Das erreichte (bzw. berechnete oder geschätzte aktuelle) Drehmoment ist das durch die Synchronmaschine bei den vorliegenden Spannungskomponenten und Stromkomponenten bereitgestellte Drehmoment.

Die Schritte c1), d1) und e1) werden insbesondere zeitlich parallel zu den Schritten c) und d) durchgeführt. Die Schritte c) und d) sowie c1), d1) und e1) werden insbesondere mehrmals nacheinander durchlaufen, wobei insbesondere immer genauere Werte für auf die Synchronmaschine einzuprägende Spannungskomponenten $u_d$ und $u_q$ sowie Stromkomponenten $i_d$ und $i_q$ ermittelt werden. Dies trifft auf einen stationären Arbeitspunkt zu. Bei einer Änderung des Arbeitspunkts, z.B. eine veränderte Drehmomentanforderung und/oder eine Drehzahländerung, muss diese Regelung neu eingeschwungen werden. Die Berechnung kann im Rahmen der Maschinenregelung zyklisch initiiert werden, also z.B. alle 100 μs (entsprechend 10 kHz).

Das erreichte (aktuelle) Drehmoment kann anhand der folgenden Formel ermittelt (berechnet bzw. geschätzt) werden:

$$T = 3/2 * p * (psi_d(i_d, i_q) * i_q - psi_q(i_d, i_q) * i_d);$$

mit

T:    erreichtes Drehmoment;
p:    Polpaarzahl der Synchronmaschine;
psi:    Flussverkettung.

Die Werte $psi_d(i_d, i_q)$ und $psi_q(i_d, i_q)$ für die Flussverkettungen (gelegentlich auch als Spulenfluss bezeichnet; Rechengröße, die sich als Produkt des physikalisch tatsächlich vorhandenen magnetischen Flusses in einer Spule mit der Windungszahl N der Spule ergibt) sind aufgrund des Sättigungsverhaltens der Synchronmaschine abhängig von den Stromkomponenten $i_d$ und $i_q$. Die Werte für die Flussverkettungen können insbesondere in einem zweiten Kennfeld hinterlegt sein oder durch Berechnungen bestimmt werden. Die Flussverkettungen sind unabhängig vom vorgeschlagenen Verfahren für den Betrieb und/oder die Regelung der Synchronmaschine, insbesondere für die Bestimmung der induzierten Gegenspannungen, erforderlich.

Insbesondere verwendet das Verfahren als Eingangsgrößen ausschließlich das geforderte Drehmoment und die maximale Spannung bzw. eine maximale Stromrichterausgangsspannung. Die maximale Spannung kann durch die aktuelle DC-Spannung (Batteriespannung) begrenzt werden und durch die Modulation im Umrichter ergibt sich dann daraus die maximale Spannung, die an die Maschine angelegt werden kann.

Bei einem (über einen Zeitraum) unveränderten (also konstantem) geforderten Drehmoment $T_{ref}$ können die Schritte c) und d) sowie c1), d1) und e1) zur iterativen Ermittlung der einzuprägenden Spannungskomponenten $u_d$ und $u_q$ sowie der Stromkomponenten $i_{dref}$ und $i_{qref}$ wiederholt durchgeführt werden.

Aufgrund der geringen erforderlichen Rechenleistung kann das vorliegende Verfahren nun in hoher Geschwindigkeit ablaufen, so dass innerhalb kürzester Zeit eine genaue Regelung der einzuprägenden Spannungskomponenten $u_d$ und $u_q$ sowie der Stromkomponenten $i_d$ und $i_q$ erfolgen kann. Der für eine iterative Ermittlung erforderliche Zeitraum, in dem ein unverändertes Drehmoment vorliegen soll, liegt daher bei nur wenigen Millisekunden, insbesondere bei weniger als 0,1 Sekunden, bevorzugt bei weniger als 0,01 Sekunden.

Der angegebene Zeitraum betrifft insbesondere (nur) den Prozess des Einschwingens der Regelung, das heißt die Zeitspanne bzw. die Anzahl von Durchläufen bis ein stabiler, im Wesentlichen optimaler Arbeitspunkt an der Spannungsgrenze erreicht ist.

Die hohe Geschwindigkeit des Verfahrens ergibt sich insbesondere aufgrund des kurzen Rechenzeitbedarfs innerhalb des Algorithmus. Wenn der gesamte Algorithmus z. B. alle 100 μs aufgerufen wird, kann die Rechendauer hier auf zum Beispiel maximal 60 μs begrenzt werden. Durch die Einsparung von komplexen Rechenvorgängen und/oder Speicheranfragen kann zudem ein einfacherer und kostengünstiger Controller eingesetzt werden.

Der nach Schritt e1) erhaltene neue Wert für die Stromkomponente $i_{qref}$ wird nun zur Ermittlung der aufzuprägenden Spannungskomponente $u_q$ herangezogen. Bei der Ermittlung der aufzuprägenden Spannungskomponente $u_q$ kann das Sättigungsverhalten der Synchronmaschine berücksichtigt werden.

Aus der aufzuprägenden Spannungskomponente $u_q$ ergibt sich in der Synchronmaschine die Stromkomponente $i_q$. Diese Stromkomponente kann gemessen bzw. transformiert werden.

Die sich einstellende Stromkomponente $i_q$ kann durch die Reglerstruktur zurückgeführt und von der Stromkomponente $i_{qref}$ subtrahiert werden. Die so erhaltene Differenz kann durch einen zweiten PI-Stromregler verarbeitet werden, wobei als Ausgangsgröße und unter Berücksichtigung einer Kreisfrequenz ω des Rotors der Synchronmaschine bzw. unter Berücksichtigung einer Flussverkettung $psi_d$ die Spannungskomponente $u_{q,ref}$ bestimmt wird. Unter Berücksichtigung der maximalen Stromrichterausgangsspannung wird aus der Spannungskomponente $u_{q,ref}$ die aufzuprägende Spannungskomponente $u_q$ ermittelt.

Es wird weiter eine Reglerstruktur zur feldorientierten Regelung einer permanenterregten Synchronmaschine mit Reluktanzmoment vorgeschlagen, wobei die Regelung der Synchronmaschine nach dem vorstehend beschriebenen Verfahren erfolgt und wobei die Reglerstruktur zur Durchführung des beschriebenen Verfahrens eingerichtet ist.

Die Reglerstruktur verwendet als Eingangsgrößen zumindest (oder sogar ausschließlich) ein gefordertes Drehmoment $T_{ref}$ und eine maximale Spannung $u_{max}$, wobei die Reglerstruktur einen PI-Spannungsregler aufweist, in dem ein Differenzbetrag aus einer vektoriellen Summe $u_s$ der Spannungskomponenten $u_{dref}$ und $u_{qref}$ sowie der maximalen

Spannung verarbeitbar ist zur Erlangung einer Ausgangsgröße $\Delta i_d$.

Die Reglerstruktur kann einen PI-Drehmomentregler aufweisen, in dem ein Differenzbetrag aus einem erreichten (aktuellen) Drehmoment mit dem geforderten Drehmoment zur Erlangung einer Ausgangsgröße $\Delta i_q$ verarbeitbar ist.

Es wird ein Kraftfahrzeug mit einer permanenterregten Synchronmaschine mit Reluktanzmoment als Antriebseinheit vorgeschlagen, wobei die Synchronmaschine über eine vorstehend beschriebene Reglerstruktur bzw. das erläuterte Verfahren betreibbar ist.

Die Ausführungen zu dem Verfahren gelten gleichermaßen für die Reglerstruktur und das Kraftfahrzeug und umgekehrt.

Vorsorglich sei angemerkt, dass die hier verwendeten Zahlwörter ("erste", "zweite", "dritte",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figur näher erläutert. Es ist darauf hinzuweisen, dass die Erfindung durch das gezeigte Ausführungsbeispiel nicht beschränkt werden soll.

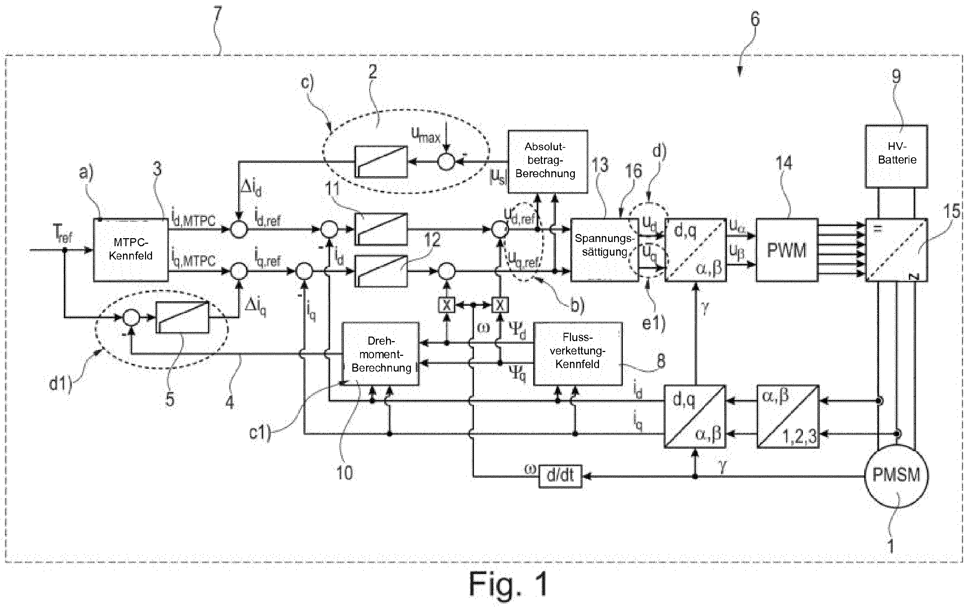

Fig. 1 zeigt schematisch ein Kraftfahrzeug mit einer Synchronmaschine 1 sowie einer Reglerstruktur, die insbesondere zu Durchführung des hier erläuterten Verfahrens eingerichtet ist.

Angedeutet ist ein Kraftfahrzeug 7 mit einer Synchronmaschine 1 sowie einer Reglerstruktur 6. Die Synchronmaschine 1 und die Reglerstruktur 6 sind mit einer Spannungsversorgung 9 und einem Inverter 15 verbunden.

Die Reglerstruktur 6 dient der feldorientierten Regelung der permanenterregten Synchronmaschine 1 mit Reluktanzmoment. Die Reglerstruktur 6 benötigt als Eingangsgrößen ein gefordertes Drehmoment $T_{ref}$ und eine maximale Spannung $u_{max}$, wobei die Reglerstruktur 6 einen PI-Spannungsregler 2 aufweist, in dem ein Differenzbetrag aus einer vektoriellen Summe $u_s$ der Spannungskomponenten und der maximalen Spannung $u_{max}$ verarbeitbar ist zur Erlangung einer Ausgangsgröße $\Delta i_d$.

Die Reglerstruktur 6 weist weiter einen PI-Drehmomentregler 5 auf, in dem ein Differenzbetrag aus einem erreichten Drehmoment 4 mit dem geforderten Drehmoment $T_{ref}$ zur Erlangung einer Ausgangsgröße $\Delta i_q$ verarbeitbar ist.

Das Verfahren zur feldorientierten Regelung einer permanenterregten Synchronmaschine 1 mit Reluktanzmoment umfasst gemäß Schritt a) das Ermitteln jeweils einer einzuprägenden fluss- und drehmomentbildenden Stromkomponente ($i_{d,MTPC}$, $i_{qMTPC}$) in Abhängigkeit eines geforderten Drehmoments $T_{ref}$. Gemäß Schritt b) umfasst es die Ermittlung jeweils einer Spannungskomponente ($u_{dref}$, $u_{qref}$) in und senkrecht zur Flussrichtung in Abhängigkeit von den Stromkomponenten ($i_{d,MTPC}$, $i_{qMTPC}$). In Schritt c) wird ein Differenzbetrag aus einer vektoriellen Summe $u_s$ der Spannungskomponenten und einer maximalen Spannung $u_{max}$ gebildet und dieser in einem PI-Spannungsregler verarbeitet, wobei als Ausgangsgröße ein erster Differenzwert $\Delta i_d$ erhalten wird. Gemäß Schritt d) wird die Stromkomponente $i_{d,MTPC}$ und der erste Differenzwert $\Delta i_d$ addiert und eine Spannungskomponente $u_d$ zur Einprägung auf die Synchronmaschine 1 ermittelt. Bei der Addition der Stromkomponente $i_{d,MTPC}$ und des ersten Differenzwerts $\Delta i_d$ wird eine Stromkomponente $i_{dref}$ errechnet.

Die Stromkomponenten $i_{d,MTPC}$ und $i_{q,MTPC}$ in Schritt a) werden aus jeweils einem ersten Kennfeld 3 ausgelesen, wobei das erste Kennfeld 3 (bzw. die ersten Kennfelder 3 jeweils) eindimensional ist ($i = f(T_{ref})$). Das heißt, dass die in dem ersten Kennfeld 3 hinterlegten Stromkomponenten $i_{d,MTPC}$ und $i_{q,MTPC}$ ausschließlich in Abhängigkeit von dem geforderten Drehmoment $T_{ref}$ vorliegen. Damit wird hier ein erstes Kennfeld 3 mit einer begrenzten Anzahl von Werten bereitgestellt, das schnell mit geringer Rechenleistung ausgelesen werden kann.

Die Stromkomponenten $i_{d,MTPC}$ und $i_{qMTPC}$ werden in Abhängigkeit von dem (z. B. durch einen Fahrer des Kraftfahrzeugs 7, bzw. durch eine Steuereinrichtung des Kraftfahrzeugs 7) geforderten Drehmoment $T_{ref}$ ermittelt. Darauf basierend werden die Spannungskomponenten $u_{dref}$ und $u_{qref}$ ermittelt.

Der nach Schritt d) erhaltene neue Wert für die Stromkomponente $i_{dref}$ wird zur Ermittlung der aufzuprägenden Spannungskomponente $u_d$ herangezogen. Bei der Ermittlung der aufzuprägenden Spannungskomponente $u_d$ kann die maximale Stromrichterausgangsspannung 16 berücksichtigt werden (z. B. durch das zweite Reglerstrukturteil 13).

Aus der aufzuprägenden Spannungskomponente $u_d$ ergibt sich an der Synchronmaschine die Stromkomponente $i_d$.

Die ermittelte Stromkomponente $i_d$ kann durch die Reglerstruktur 6 zurückgeführt und von der Stromkomponente $i_{dref}$ subtrahiert werden. Die so erhaltene Differenz kann durch einen ersten PI-Stromregler 11 verarbeitet werden, wobei als Ausgangsgröße und unter Berücksichtigung einer Kreisfrequenz $\omega$ des Rotors der Synchronmaschine 1 bzw. unter Berücksichtigung einer Flussverkettung $psi_q$ die Spannungskomponente $u_{d,ref}$ bestimmt wird. Unter Berücksichtigung des Sättigungsverhaltens der Synchronmaschine 1 wird aus der Spannungskomponente $u_{dref}$ die aufzuprägende Spannungskomponente $u_d$ ermittelt.

Nach Schritt b) wird in einem weiteren Schritt c1) ein sich anhand der einzuprägenden Spannungskomponenten ($u_d$, $u_q$) und sich einstellenden Stromkomponenten ($i_d$, $i_q$) einstellendes aktuelles Drehmoment 4 ermittelt. In einem weiteren Schritt d1) wird ein Differenzbetrag aus dem erreichten Drehmoment 4 und dem geforderten Drehmoment $T_{ref}$

gebildet und in einem PI-Drehmomentregler 5 verarbeitet. Als Ausgangsgröße des PI-Drehmomentreglers 5 wird ein zweiter Differenzwert $\Delta i_q$ erhalten. In einem Schritt e1) werden die Stromkomponente $i_{q,MTPC}$ und der Differenzwert $\Delta i_q$ addiert und eine Spannungskomponente $u_q$ zur Einprägung auf die Synchronmaschine ermittelt.

Der nach Schritt e1) erhaltene neue Wert für die Stromkomponente $i_q$ wird zur Ermittlung der aufzuprägenden Spannungskomponente $u_q$ herangezogen. Bei der Ermittlung der aufzuprägenden Spannungskomponente $u_q$ kann die maximale Stromrichterausgangsspannung 16 berücksichtigt werden (z. B. durch das zweite Reglerstrukturteil 13).

Aus der aufzuprägenden Spannungskomponente $u_q$ ergibt sich an der Synchronmaschine 1 die Stromkomponente $i_q$.

Die sich einstellende Stromkomponente $i_q$ kann durch die Reglerstruktur 6 zurückgeführt und von der Stromkomponente $i_{qref}$ subtrahiert werden. Die so erhaltene Differenz kann durch einen zweiten PI-Stromregler 12 verarbeitet werden, wobei als Ausgangsgröße und unter Berücksichtigung einer Kreisfrequenz $\omega$ des Rotors der Synchronmaschine 1 bzw. unter Berücksichtigung einer Flussverkettung $psi_d$ die Spannungskomponente $u_{q,ref}$ bestimmt wird. Unter Berücksichtigung der maximalen Stromrichterausgangsspannung 16 wird aus der Spannungskomponente $u_{q,ref}$ die aufzuprägende Spannungskomponente $u_q$ ermittelt.

Die Schritte c1), d1) und e1) können parallel zu den Schritten c) und d) durchgeführt werden. Die Schritte c) und d) sowie c1), d1) und e1) werden mehrmals nacheinander durchlaufen, so dass immer genauere Werte für die auf die Synchronmaschine einzuprägenden Spannungskomponenten ($u_d$, $u_q$) und sich einstellenden Stromkomponenten ($i_d$, $i_q$) ermittelt werden können.

Das erreichte Drehmoment 4 wird unter Berücksichtigung der Eingangsgrößen $psi_d(i_d, i_q)$ und $psi_q(i_d, i_q)$ für die Flussverkettungen und der an der Synchronmaschine 1 anliegenden Stromkomponenten ($i_d$, $i_q$) in dem ersten Reglerstrukturteil 10 ermittelt.

Die Werte sind aufgrund des Sättigungsverhaltens der Synchronmaschine 1 abhängig von den Stromkomponenten ($i_d$, $i_q$). Die Werte für die Flussverkettungen $psi_d(i_d, i_q)$ und $psi_q(i_d, i_q)$ können in einem zweiten Kennfeld 8 hinterlegt sein.

Weitere Teile der Reglerstruktur 6 dienen der bekannten Umrechnung der mit dem Rotor rotierenden Komponenten (Kürzel d bzw. q; rotierendes Koordinatensystem) hin zu feststehenden Komponenten (Kürzel $\alpha$ und $\beta$, feststehendes Koordinatensystem) und umgekehrt. Weiterhin erfolgt eine Einprägung der ermittelten Spannungskomponenten $u_d$ und $u_q$ nach der vorstehend beschriebenen Umrechnung über ein drittes Reglerstrukturteil 14 (Pulsweitenmodulator), durch eine Pulsweitenmodulation (PWM).

| | |
|---|---|
| $\Delta i_d$ | erster Differenzwert |
| $u_d$ | Spannungskomponente |
| $u_q$ | Spannungskomponente |
| $i_d$ | Stromkomponente |
| $i_q$ | Stromkomponente |
| $\Delta i_q$ | zweiter Differenzwert |
| $\omega$ | Kreisfrequenz |

**Patentansprüche**

1. Verfahren zur feldorientierten Regelung einer permanenterregten Synchronmaschine (1) mit Reluktanzmoment, zumindest umfassend die folgenden Schritte:

a) Ermitteln jeweils einer einzuprägenden flussbildenden Stromkomponente $i_{d,MTPC}$ und einer drehmomentbildenden Stromkomponente $i_{qMTPC}$ in Abhängigkeit eines geforderten Drehmoments $T_{ref}$;
b) Ermittlung jeweils einer Spannungskomponente in Flussrichtung $_{Udref}$ und einer Spannungskomponente senkrecht zur Flussrichtung $u_{qref}$ in Abhängigkeit von den Stromkomponenten $i_{d,MTPC}$ und $i_{q,MTPC}$;
c) Bilden eines Differenzbetrags aus einem Betrag einer vektoriellen Summe $u_s$ aus den Spannungskomponenten $_{Udref}$ und $_{Uqref}$ und einer maximalen Spannung $u_{max}$ und Verarbeitung des Differenzbetrags in einem PI-Spannungsregler (2), wobei als Ausgangsgröße ein erster Differenzwert $\Delta i_d$ erhalten wird;
d) Addieren der flussbildenden Stromkomponente $i_{d,MTPC}$ und des ersten Differenzwerts $\Delta i_d$ und Ermitteln einer Spannungskomponente $u_d$ zur Einprägung auf die Synchronmaschine (1); das Verfahren umfassend den weiteren Schritt, dass nach Schritt b), in einem weiteren Schritt c1) ein anhand der einzuprägenden Spannungskomponenten $u_d$ und $u_q$ sowie der Stromkomponenten $i_d$ und $i_q$ erreichtes Drehmoment (4) ermittelt wird;

**dadurch gekennzeichnet, dass**
in einem weiteren Schritt d1) ein Differenzbetrag aus dem erreichten Drehmoment (4) und dem geforderten Drehmoment $T_{ref}$ gebildet und in einem PI-Drehmomentregler (5) verarbeitet wird; wobei als Ausgangsgröße ein zweiter Differenzwert $\Delta i_q$ erhalten wird; wobei in einem Schritt e1) die Stromkomponente $i_{q,MTPC}$ und der zweite Differenzwert $\Delta i_q$ addiert werden und eine Spannungskomponente $u_q$ zur Einprägung auf die Synchronmaschine (1) ermittelt wird; wobei sich die aufzuprägende Stromkomponente $i_d$ infolge des Anlegens der Spannungskomponente $u_d$ und die aufzuprägende Stromkomponente $i_q$ infolge des Anlegens der Spannungskomponente $u_q$ an der Synchronmaschine (1) ergibt.

2. Verfahren nach Patentanspruch 1, wobei die Stromkomponenten $i_{d,MTPC}$ und $i_{q,MTPC}$ in Schritt a) aus jeweils einem ersten Kennfeld (3) ausgelesen werden, wobei das erste Kennfeld (3) eindimensional ist.

3. Verfahren nach einem der vorhergehenden Patentansprüche, wobei das erreichte Drehmoment (4) anhand der folgenden Formel ermittelt wird:

$$T = 3/2 * p * (psi_d(i_d, i_q) * i_q - psi_q(i_d, i_q) * i_d);$$

mit

    T: erreichtes Drehmoment (4);
    p: Polpaarzahl der Synchronmaschine (1);
    psi: Flussverkettung.

4. Verfahren nach einem der vorhergehenden Patentansprüche, wobei das Verfahren als Eingangsgrößen ausschließlich das geforderte Drehmoment $T_{ref}$ und die maximale Spannung $u_{max}$ verwendet.

5. Verfahren nach einem der vorhergehenden Patentansprüche, wobei bei einem unveränderten geforderten Drehmoment $T_{ref}$ die Schritte c) und d) sowie c1), d1) und e1) zur iterativen Ermittlung der einzuprägenden Spannungskomponenten $u_d$ und $u_q$ sowie der Stromkomponenten $i_d$ und $i_q$ wiederholt durchgeführt werden.

6. Reglerstruktur (6) zur feldorientierten Regelung einer permanenterregten Synchronmaschine (1) mit Reluktanzmoment, wobei die Reglerstruktur (6) zur Durchführung eines Verfahrens gemäß einem der vorhergehenden Patentansprüche eingerichtet ist; wobei die Reglerstruktur (6) als Eingangsgrößen zumindest ein gefordertes Drehmoment $T_{ref}$ und eine maximale Spannung $u_{max}$ verwendet, wobei die Reglerstruktur (6) einen PI-Spannungsregler (2) aufweist, in dem ein Differenzbetrag aus einer vektoriellen Summe $u_s$ der Spannungskomponenten $U_{dref}$ und $U_{qref}$ sowie der maximalen Spannung $u_{max}$ verarbeitbar ist zur Erlangung einer Ausgangsgröße $\Delta i_d$.

7. Reglerstruktur (6) nach Patentanspruch 6, wobei die Reglerstruktur (6) einen PI-Drehmomentregler (5) aufweist, in dem ein Differenzbetrag aus einem erreichten Drehmoment (4) mit dem geforderten Drehmoment $T_{ref}$ zur Erlangung einer Ausgangsgröße $\Delta i_q$ verarbeitbar ist.

8. Kraftfahrzeug (7) mit einer permanenterregten Synchronmaschine (1) mit Reluktanzmoment als Antriebseinheit; wobei die Synchronmaschine (1) über eine Reglerstruktur (6) gemäß einem der vorhergehenden Patentansprüche 6 und 7 betreibbar ist.

## Claims

1. Method for the field-oriented control of a permanently excited synchronous machine (1) with reluctance torque, at least comprising the following steps:

    a) respective determination of a flux-generating current component to be injected $i_{d,MTPC}$ and a torque-generating current component $i_{qMTPC}$, as a function of a required torque $T_{ref}$;
    b) respective determination of a voltage component in the flux direction $U_{dref}$ and of a voltage component perpendicular to the flux direction $u_{qref}$, as a function of the current components $i_{d,MTPC}$ and $i_{q,MTPC}$;
    c) Constitution of a differential amount from an amount of a vectorial sum $u_s$ of the voltage components $U_{dref}$ and $U_{qref}$ and a maximum voltage $u_{max}$, and processing of the differential amount in a PI-voltage controller (2), wherein a first differential value $\Delta i_d$ is obtained as an output variable;
    d) Addition of the flux-generating current component $i_{d,MTPC}$ and the first differential value $\Delta i_d$, and determination

of a voltage component $u_d$ for injection into the synchronous machine (1);

the method comprising the further step, that, following step b), in a further step c1), an achieved torque (4) is determined by reference to the voltage components $u_d$ and $u_q$ to be injected and the current components $i_d$ and $i_q$; **characterized in that**, in a further step d1), a differential amount is constituted from the achieved torque (4) and the required torque $T_{ref}$, and processed in a PI-torque controller (5); wherein a second differential value $\Delta i_q$ is obtained as an output variable; wherein, in a step e1), the current component $i_{q,MTPC}$ and the differential value $\Delta i_q$ are added, and a voltage component $u_q$ is determined for injection into the synchronous machine (1), wherein the current component $i_d$ to be injected proceeds from the application of the voltage component $u_d$ and the current component $i_q$ to be injected proceeds from the application of the voltage component $u_q$ to the synchronous machine.

2. Method as claimed in claim 1, wherein the current components $i_{d,MTPC}$ and $i_{q,MTPC}$ in step a) are read out respectively from a first characteristic diagram (3), wherein the first characteristic diagram (3) is one-dimensional.

3. Method as claimed in one of the preceding claims, wherein the achieved torque (4) is determined by the following formula:

$$T = 3/2 * p * (psi_d(i_d, i_q) * i_q - psi_q(i_d, i_q) * i_d);$$

where

   T: is the achieved torque (4);
   p: is the pole pair number of the synchronous machine (1);
   psi: is the flux linkage.

4. Method as claimed in one of the preceding claims, wherein, by way of input variables, the method exclusively employs the required torque $T_{ref}$ and the maximum voltage $u_{max}$.

5. Method as claimed in one of the preceding claims wherein, in the event of an unchanged required torque $T_{ref}$, the steps c) and d), together with c1), d1) and e1), are executed repeatedly for the iterative determination of the voltage components $u_d$ and $u_q$ to be injected and the current components $i_d$ and $i_q$.

6. Control structure (6) for the field-oriented control of a permanently excited synchronous machine (1) with reluctance torque, wherein the control structure (6) is set up to carry out the method as claimed in one of the preceding claims; wherein the control structure (6), by way of input variables, at least employs a required torque $T_{ref}$ and a maximum voltage $u_{max}$, wherein the control structure (6) comprises a PI-voltage controller (2), in which a differential amount can be processed from a vectorial sum $u_s$ of the voltage components $u_{dref}$ and $u_{qref}$, together with the maximum voltage $u_{max}$, in order to obtain an output variable $\Delta i_d$.

7. Control structure (6) as claimed in claim 6, wherein the control structure (6) comprises a PI-torque controller (5), in which a differential amount can be processed from an achieved torque (4), together with the required torque $T_{ref}$, in order to obtain an output variable $\Delta i_q$.

8. Motor vehicle (7) having a permanently excited synchronous machine (1) with reluctance torque by way of a drive unit; wherein the synchronous machine (1) is operable by means of a control structure (6) as claimed in one of the preceding claims 6 and 7.

## Revendications

1. Procédé de régulation à orientation du champ d'une machine synchrone (1) à excitation permanente avec un moment de réluctance, comprenant au moins les étapes suivantes :

   a) détermination respective d'une composante de courant formant un flux $i_{d,MTPC}$ à imposer et d'une composante de courant formant un couple $i_{qMTPC}$ en fonction d'un couple exigé $T_{ref}$ ;
   b) détermination respective d'une composante de tension dans le sens du flux $U_{dref}$ et d'une composante de tension perpendiculaire sens du flux $U_{qref}$ en fonction des composantes de courant $i_{d,MTPC}$ et $i_{q,MTPC}$ ;

c) formation d'une valeur de différence à partir d'une valeur d'une somme vectorielle $u_s$ des composantes de tension $_U$dref et $_U$qref et d'une tension maximale $u_{max}$ et traitement de la valeur de différence dans un régulateur de tension PI (2), la grandeur de sortie obtenue étant une première valeur de différence $Di_d$ ;

d) addition de la composante de courant formant un flux $i_{d,MTPC}$ et de la première valeur de différence $Di_d$ et détermination d'une composante de tension $u_d$ à imposer sur la machine synchrone (1) ;

le procédé comprenant l'étape supplémentaire selon laquelle, après l'étape b), dans une étape supplémentaire c1), un couple (4) atteint à l'aide des composantes de tension $u_d$ et $u_q$ à imposer ainsi que des composantes de courant $i_d$ et $i_q$ est déterminé ;

**caractérisé en ce que**

dans une étape supplémentaire d1), la valeur de différence entre le couple atteint (4) et le couple exigé $T_{ref}$ est formée et traitée dans un régulateur de couple PI (5) ; la grandeur de sortie obtenue étant une deuxième valeur de différence $Di_q$ ; dans une étape e1), la composante de courant $i_{q,MTPC}$ et la deuxième valeur de différence $Di_q$ étant additionnées et une composante de tension $u_q$ à imposer sur la machine synchrone (1) étant déterminée ; la composante de courant $i_d$ à appliquer étant obtenue en conséquence de l'application de la composante de tension $u_d$ et de la composante de courant $i_q$ à appliquer suite à l'application de la composante de tension $u_q$ à la machine synchrone (1).

2. Procédé selon la revendication 1, les composantes de courant $i_{d,MTPC}$ et $i_{q,MTPC}$ à l'étape a) étant respectivement relevées depuis un premier diagramme caractéristique (3), le premier diagramme caractéristique (3) étant unidimensionnel.

3. Procédé selon l'une des revendications précédentes, le couple atteint (4) étant déterminé à l'aide de la formule suivante :

$$T = 3/2 * p * (psi_d(i_d, i_q) * i_q - psi_q(i_d, i_q) * i_d) \ ;$$

où

T : couple atteint (4) ;
p : nombre de paires de pôles de la machine synchrone (1) ;
psi : enchaînement des flux.

4. Procédé selon l'une des revendications précédentes, le procédé utilisant comme grandeurs d'entrée exclusivement le couple exigé $T_{ref}$ et la tension maximale $u_{max}$.

5. Procédé selon l'une des revendications précédentes, dans le cas d'un couple exigé $T_{ref}$ inchangé, les étapes c) et d) ainsi que c1), d1) et e1) étant exécutées de manière répétitive en vue de la détermination itérative des composantes de tension $u_d$ et $u_q$ à imposer ainsi que des composantes de courant $i_d$ et $i_q$.

6. Structure de régulateur (6) pour la régulation à orientation du champ d'une machine synchrone (1) à excitation permanente avec un moment de réluctance, la structure de régulateur (6) étant conçue pour mettre en oeuvre un procédé selon l'une des revendications précédentes ; la structure de régulateur (6) utilisant comme grandeurs d'entrée au moins un couple exigé $T_{ref}$ et une tension maximale $u_{max}$, la structure de régulateur (6) possédant un régulateur de tension PI (2) dans lequel peut être traitée une valeur de différence entre une somme vectorielle $u_s$ des composantes de tension $_U$dref et $_U$qref et ainsi que de la tension maximale $u_{max}$ en vue d'obtenir une grandeur de sortie $Di_d$.

7. Structure de régulateur (6) selon la revendication 6, la structure de régulateur (6) possédant un régulateur de couple PI (5) dans lequel peut être traitée une valeur de différence entre un couple atteint (4) et le couple exigé $T_{ref}$ en vue d'obtenir une grandeur de sortie $Di_q$.

8. Véhicule automobile (7) comprenant une machine synchrone (1) à excitation permanente avec un moment de réluctance en tant qu'unité de propulsion ; la machine synchrone (1) pouvant être mise en fonctionnement par le biais d'une structure de régulateur (6) selon l'une des revendications précédentes 6 et 7.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140306638 A1
- US 20130257324 A1

- EP 2544362 A2